# EUROPÄISCHE PATENTANMELDUNG

(11) **EP 3 130 633 A1**
(43) Veröffentlichungstag der Anmeldung: **15.02.2017**
(21) Anmeldenummer: 15180857.3
(22) Anmeldetag: 13.08.2015
(51) Int. Cl.: C08K 7/14, C08G 73/00

(54) **POLYAMIDE MIT GUTER MECHANIK UND SCHWINDUNG**

(71) Anmelder: BASF SE, 67056 Ludwigshafen am Rhein (DE)
(72) Erfinder: CREMER, Jens, 67269 Gruenstadt (DE); SCHAEFER, Andre, 67346 Speyer (DE); RAUSCHENBERGER, Volker, 67304 Eisenberg (DE)
(74) Vertreter: BASF IP Association

(57) **Zusammenfassung**

Die Erfindung betrifft thermoplastische Formmassen, enthaltend
A) 10 bis 90 Gew.-% mindestens eines Polyamids
B) 10 bis 70 Gew.-% mindestens einer Glasfaser der folgenden Zusammensetzung:
B1) 57,5 bis 59,5 Gew.-% SiO₂
B2) 17 bis 20 Gew.-% Al₂O₃
B3) 11 bis 13,5 Gew.-% CaO
B4) 8,5 bis 12,5 Gew.-% MgO
B5) 0 bis 4 Gew.-% weiterer Oxide
C) 0 bis 2 Gew.-% mindestens eines Wärmestabilisators,
D) 0 bis 1,5 Gew.-% mindestens eines Schmiermittels und
E) 0 bis 20 Gew.-% weiterer Zusatzstoffe,
wobei die Summe der Gewichtsprozente A) bis E) sowie B1) bis B5) 100 % beträgt.

## Beschreibung

Die Erfindung betrifft thermoplastische Formmassen, enthaltend
A) 10 bis 90 Gew.-% mindestens eines Polyamids
B) 10 bis 70 Gew.-% mindestens einer Glasfaser der folgenden Zusammensetzung:
   B1) 57,5 bis 59,5 Gew.-% SiO₂
   B2) 17 bis 20 Gew.-% Al₂O₃
   B3) 11 bis 13,5 Gew.-% CaO
   B4) 8,5 bis 12,5 Gew.-% MgO
   B5) 0 bis 4 Gew.-% weiterer Oxide
C) 0 bis 2 Gew.-% mindestens eines Wärmestabilisators,
D) 0 bis 1,5 Gew.-% mindestens eines Schmiermittels und
E) 0 bis 20 Gew.-% weiterer Zusatzstoffe,
wobei die Summe der Gewichtsprozente A) bis E) sowie B1) bis B5) 100 % beträgt.

Weiterhin betrifft die Erfindung die Verwendung zur Herstellung von Formkörpern jeglicher Art und Formkörper, die aus den erfindungsgemäßen Formmassen erhalten wurden, insbesondere langglasfaserverstärkte PA-Granulate, welche vorzugsweise via Pultrusion erhältlich sind und die hierbei erhältlichen Formkörper.

Bei der Verstärkung von Polyamidformmassen durch Glasfasern kommen praktisch ausschließlich sogenannte E-Glasfasern mit rundem Querschnitt zum Einsatz. E-Glasfasern bestehen gemäß ASTM D578-00 aus 52-62 % Silicumdioxid, 12-16 % Aluminiumoxid, 16-25 % Calciumoxid, 0-10 % Borax, 0-5 % Magnesiumoxid, 0-2 % Alkalioxide, 0-1,5 % Titandioxid und 0-0,3 % Eisenoxid. E-Glasfasern haben eine Dichte von 2,54-2,62 g/cm³, einen Zug-E-Modul von 70-75 GPa, eine Zugfestigkeit von 3000-3500 MPa und eine Reissdehung von 4,5-4,8 %, wobei die mechanischen Eigenschaften an Einzelfasern mit einem Durchmesser von 10 mm und eine Länge von 12,7 mm bei 23 °C und einer relativen Luftfeuchte von 50 % bestimmt wurden.
Die heute erhältlichen Glasfasern sind (fast) alle ECR-Gläser.

E-Glas (E-Electric) ist ein Aluminium-Borosilikatglas mit einem geringen Anteil an Alkalioxiden (< 2 Gew.-%) und guten Elektroisolationseigenschaften. Die E-Glasfasern sind besonders gut geeignet für die Herstellung von gedruckten Schaltungen und für die Kunststoffverstärkung.

Ein großer Nachteil der E-Gläser ist ihre niedrige Säurebeständigkeit. Diese E-Gläser werden unter anderem in den Patentschriften US 3 876 481; US 3 847 627, US 2 334 961;
US 2 571 074; US 4 026 715; US 3 929 497; US 5 702 498; EP 0 761 619 A1; US 4 199 364 und in US 3 095 311 beschrieben.

DE-A- 1596768 beschreibt die Herstellung des sog. R-Glases mit der Zusammensetzung 50-65 Gew.-% SiO₂, 20-30 Gew.-% Al₂O₃, 5-20 Gew.-% MgO und 6-16 Gew.-% CaO. Glasfasern, basierend auf dieser Zusammensetzung, zeigen signifikant höhere mechanische Eigenschaften gegenüber dem sog. E-Glas, jedoch ist deren Herstellung nicht wirtschaftlich möglich.

R-Glas bedeutet Resistance-Glas und ist ein Erdalkali-Aluminium-Silikatglas.

Die R-Glasfasern werden in Anwendungsbereichen mit mechanischen und thermischen Anforderungen eingesetzt, jedoch ist die Mechanik verbesserungswürdig.

Ein ECR-Glas (ECR= E-Glass Corrosion Resistance), beispielsweise, beschrieben in DE-T2- 69607614, ist ein borfreies Aluminium-Kalksilikatglas mit einem niedrigen Anteil an Alkalioxiden. Die ECR-Glasfasern weisen hohe Säurebeständigkeit und gute mechanische und elektrische Eigenschaften auf.

Advantex^{®}-Glas, beschrieben in US 5 789 329, stellt eine Modifikation des ECR-Glases mit einem sehr geringen Anteil an Alkalioxiden und verbesserten physikalisch-chemischen Eigenschaften dar. Die langzeitige Temperaturbeständigkeit dieser Faserart liegt bei ca. 740 °C.

S-Glas (S=Strength) ist ein Magnesium-Aluminiumsilikatglas. Es wurde als Spezialglas für hohe mechanische Anforderungen, insbesondere bei erhöhter Temperatur, entwickelt (u.a. WO02/042233 A3) und enthält mehr als 10 Mol % Al₂O₃. Nachteilig ist der hohe Schmelzpunkt der entsprechenden Zusammensetzung, so dass S-Glasfasern nur unter hohen Herstellkosten zugänglich sind.

Die WO2013/156477 offenbart eine Glaszusammensetzung mit gegenüber ECR-Glas besseren mechanischen Eigenschaften, wobei der Schmelzpunkt gegenüber diesem nur leicht erhöht ist, so dass eine wirtschaftliche Herstellung gegeben ist. Die Glaszusammensetzung wird dabei angegeben mit: 57,5-58,5 Gew.- % SiO₂, 17,5-19,0 Gew.-% Al₂O₃, 11,5-13,0 Gew.-% CaO und 9,5-11,5 Gew.-% MgO.

Die EP-A 2703436 beschreibt die Herstellung von Polyamid-Formmassen auf Basis verschiedener Glasfasertypen. Hier kommen neben den Standard-E-Glas-Typen auch S-Glasfasern zum Einsatz. Darauf basierende Compounds zeigen deutlich erhöhte mechanische Festigkeiten. Nachteilig an den Polyamiden ist neben den hohen Kosten eine nicht zufriedenstellende Mechanik.

Bislang bekannte Polyamide, welche gemäß dem Stand der Technik verstärkt wurden, sind bezüglich Mechanik und der Schwindung verbesserungswürdig.
Aufgabe der vorliegenden Erfindung war es daher, verstärkte, insbesondere langglasfaserverstärkte Polyamide zur Verfügung zu stellen, die eine gute Mechanik und bessere Schwindung bei der Verarbeitung aufweisen.

Demgemäß wurden die eingangs definierten Formmassen gefunden. Bevorzugte Ausführungsformen sind den Unteransprüchen zu entnehmen.

Als Komponente A) enthalten die erfindungsgemäßen Formmassen 10 bis 90, vorzugsweise 20 bis 79,9 und insbesondere 20 bis 50 Gew.-% mindestens eines Polyamides, wobei teilkristalline Polyamide bevorzugt sind.

Die Polyamide der erfindungsgemäßen Formmassen weisen im allgemeinen eine Viskositätszahl von 79,9 bis 350, vorzugsweise 110 bis 240 ml/g auf, bestimmt in einer 0,5 gew.-%igen Lösung in 96 gew.-%iger Schwefelsäure bei 25°C gemäß ISO 307.

Halbkristalline oder amorphe Harze mit einem Molekulargewicht (Gewichtsmittelwert) von mindestens 5.000, wie sie z.B. in den amerikanischen Patentschriften 2 071 250, 2 071 251, 2 130 523, 2 130 948, 2 241 322, 2 312 966, 2 512 606 und 3 393 210 beschrieben werden, sind bevorzugt.

Beispiele hierfür sind Polyamide, die sich von Lactamen mit 7 bis 13 Ringgliedern ableiten, wie Polycaprolactam, Polycapryllactam und Polylaurinlactam sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10 Kohlenstoffatomen und aromatische Dicarbonsäuren einsetzbar. Hier seien nur Adipinsäure, Azelainsäure, Sebacinsäure, Dodecandisäure und Terephthal- und/oder Isophthalsäure als Säuren genannt.

Als Diamine eignen sich besonders Alkandiamine mit 6 bis 12, insbesondere 6 bis 8 Kohlenstoffatomen sowie m-Xylylendiamin (z.B. Ultramid^{®} X17 der BASF SE, ein 1:1 molares Verhältnis von MXDA mit Adipinsäure), Di-(4-aminophenyl)methan, Di-(4-amino-cyclohexyl)-methan, 2,2-Di- (4-aminophenyl)-propan, 2,2-Di-(4-aminocyclohexyl)-propan oder 1,5-Diamino-2-methyl-pentan.

Bevorzugte Polyamide sind Polyhexamethylenadipinsäureamid, Polyhexamethylensebacinsäureamid und Polycaprolactam sowie Copolyamide 6/66, insbesondere mit einem Anteil von 5 bis 95 Gew.-% an Caprolactam-Einheiten (z.B. Ultramid^{®} C31 der BASF SE).

Weiterhin geeignete Polyamide sind erhältlich aus ω-Aminoalkylnitrilen wie beispielsweise Aminocapronitril (PA 6) und Adipodinitril mit Hexamethylendiamin (PA 66) durch sog. Direktpolymerisation in Anwesenheit von Wasser, wie beispielsweise in der DE-A 10313681, EP-A 1198491 und EP 922065 beschrieben.
Außerdem seien auch noch Polyamide erwähnt, die z.B. durch Kondensation von 1,4-Diaminobutan mit Adipinsäure unter erhöhter Temperatur erhältlich sind (Polyamid 4,6). Herstellungsverfahren für Polyamide dieser Struktur sind z.B. in den EP-A 38 094, EP-A 38 582 und EP-A 39 524 beschrieben.

Weiterhin sind Polyamide, die durch Copolymerisation zweier oder mehrerer der vorgenannten Monomeren erhältlich sind, oder Mischungen mehrerer Polyamide geeignet, wobei das Mischungsverhältnis beliebig ist. Besonders bevorzugt sind Mischungen von Polyamid 66 mit anderen Polyamiden, insbesondere Copolyamide 6/66.

Weiterhin haben sich solche teilaromatischen Copolyamide wie PA 6/6T und PA 66/6T als besonders vorteilhaft erwiesen, deren Triamingehalt weniger als 0,5, vorzugsweise weniger als 0,3 Gew.-% beträgt (siehe EP-A 299 444). Weitere hochtemperaturbeständige Polyamide sind aus der EP-A 19 94 075 bekannt (PA 6T/6I/MXD6).

Die Herstellung der bevorzugten teilaromatischen Copolyamide mit niedrigem Triamingehalt kann nach den in den EP-A 129 195 und 129 196 beschriebenen Verfahren erfolgen.

Die nachfolgende nicht abschließende Aufstellung enthält die genannten, sowie weitere Polyamide A) im Sinne der Erfindung und die enthaltenen Monomeren.

AB-Polymere:
- PA 4: Pyrrolidon
- PA 6: ε-Caprolactam
- PA 7: Ethanolactam
- PA 8: Capryllactam
- PA 9: 9-Aminopelargonsäure
- PA 11: 11-Aminoundecansäure
- PA 12: Laurinlactam
- AA/BB-Polymere PA 46: Tetramethylendiamin, Adipinsäure
- PA 66: Hexamethylendiamin, Adipinsäure
- PA 69: Hexamethylendiamin, Azelainsäure
- PA 610: Hexamethylendiamin, Sebacinsäure
- PA 612: Hexamethylendiamin, Decandicarbonsäure
- PA 613: Hexamethylendiamin, Undecandicarbonsäure
- PA 1212: 1,12-Dodecandiamin, Decandicarbonsäure
- PA 1313: 1,13-Diaminotridecan, Undecandicarbonsäure
- PA 6T: Hexamethylendiamin, Terephthalsäure
- PA 9T: 1,9-nonanediamin, Terephthalsäure
- PA MXD6: m-Xylylendiamin, Adipinsäure
- PA 6I: Hexamethylendiamin, Isophthalsäure
- PA 6-3-T: Trimethylhexamethylendiamin, Terephthalsäure
- PA 6/6T: (siehe PA 6 und PA 6T)
- PA 6/66: (siehe PA 6 und PA 66)
- PA 6/12: (siehe PA 6 und PA 12)
- PA 66/6/610: (siehe PA 66, PA 6 und PA 610)
- PA 6I/6T: (siehe PA 6I und PA 6T)
- PA PACM 12: Diaminodicyclohexylmethan, Laurinlactam
- PA 6I/6T/PACM: wie PA 6I/6T + Diaminodicyclohexylmethan
- PA 12/MACMI: Laurinlactam, Dimethyl-diaminodicyclohexylmethan, Isophthalsäure
- PA 12/MACMT: Laurinlactam, Dimethyl-diaminodicyclohexylmethan, Terephthalsäure
- PA PDA-T: Phenylendiamin, Terephthalsäure

Als Komponente B) enthalten die erfindungsgemäßen Formmassen 10 bis 70, vorzugsweise 20 bis 60 und insbesondere 40 bis 50 Gew.-% mindestens einer Glasfaser der folgenden Zusammensetzung:
B1) 57,5 bis 59,5 Gew.-% SiO₂
B2) 17 bis 20 Gew.-% Al₂O₃
B3) 11 bis 13,5 Gew.-% CaO
B4) 8,5 bis 12,5 Gew.-% MgO
B5) 0 bis 4 Gew.-% weiterer Oxide,
wobei die Summe der Gewichtsprozente B1) bis B5) 100 % beträgt.

Bevorzugt weisen die Glasfasern folgende Zusammensetzung auf:
B1) 57,5 bis 58,5 Gew.-%
B2) 17,5 % bis 19,0 Gew.-%
B3) 11,5 bis 13 Gew.-%
B4) 9,5 bis 11,5 Gew.-%
B5) 0 bis 3 Gew.-%

Unter weiteren Oxiden B5) sollen Oxide der Elemente Li, Zn, Mn, Le, V, Ti, Be, Sn, Ba, Zr, Sr, Fe, B, Na, K oder deren Mischungen verstanden werden.

Beispielsweise können die Glasfasern bis zu 1, vorzugsweise bis zu 0,5 Gew.-% Li₂O und/oder TiO₂ enthalten.

Fe₂O₃ und/oder B₂O₃ können in Mengen von 0,1 bis 3, vorzugsweise 0,2 bis 3 Gew.-% enthalten sein.

Oxide der Elemente Zn, Mn, Le, V, Be, Sn, Ba, Zr, Sn können erfindungsgemäß jeweils in Mengen von 0,05 bis 3 Gew.-%, vorzugsweise von 0,2 bis 1,5 Gew.-% enthalten sein.

Geeignete Mengen für Na₂O und/oder K₂O betragen mindestens 0,2 Gew.-%, bevorzugt 0,3 Gew.-% bis 4 Gew.-%.

Wesentliche bevorzugte Gesichtspunkte der erfindungsgemäßen Glasfaserzusammensetzung sind:
a) das Verhältnis MgO (B4) : Al₂O₃ (B2) beträgt mindestens 0,45 bis maximal 0,70, insbesondere von 0,50 bis 0,65
b) das Verhältnis MgO (B4) : CaO (B3) beträgt 0,7 bis 1,1, insbesondere von 0,75 bis 1,0

Die Summe von MgO + CaO und MgO + Al₂O₃ sind insbesondere auf folgende Bereiche beschränkt:
a) 20,0 < MgO + CaO < 26,0 Gew.-%, insbesondere 22,0 < MgO + CaO < 25,0 Gew.-%, und
b) 25,5 < MgO + Al₂O₃ < 33,0 Gew.-%, insbesondere 26,0 < MgO + Al₂O₃ < 32,0 Gew.-%

Die Herstellung der Glasfasern B) ist der WO2013/156477 zu entnehmen. Für weitere Einzelheiten sei expressis verbis auf diese Schrift verwiesen.

Bevorzugt werden Glasfasern B) eingesetzt, welche eine Faserlänge von 2 bis 20 mm insbesondere von 3 bis 10 mm aufweisen und/oder ein L/D Verhältnis von 200 bis 2000 vorzugsweise von 200 bis 800.

Die Glasfasern werden für diese Anwendung nur als Endlosrovings eingesetzt.

Die erfindungsgemäß als Roving eingesetzten Glasfasern weisen einen Durchmesser von 6 bis 20 µm, bevorzugt von 10 bis 18 µm auf, wobei der Querschnitt der Glasfasern rund, oval oder eckig ist.

Die Glasfasern B) können zur besseren Verträglichkeit mit den Thermoplasten mit einer Silanverbindung oberflächlich vorbehandelt sein. Geeignete Silanverbindungen sind solche der allgemeinen Formel

(X-(CH₂)ₙ)ₖ-Si-(O-CₘH₂ₘ₊₁)₄₋ₖ

in der die Substituenten folgende Bedeutung haben:

X NH₂-,

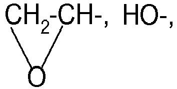

- n: eine ganze Zahl von 2 bis 10, bevorzugt 3 bis 4
- m: eine ganze Zahl von 1 bis 5, bevorzugt 1 bis 2
- k: eine ganze Zahl von 1 bis 3, bevorzugt 1

Bevorzugte Silanverbindungen sind Aminopropyltrimethoxysilan, Aminobutyltrimeth-oxysilan, Aminopropyltriethoxysilan, Aminobutyltriethoxysilan sowie die entsprechenden Silane, welche als Substituent X eine Glycidylgruppe enthalten.

Die Silanverbindungen werden im Allgemeinen in Mengen von 0,01 bis 2, vorzugsweise 0,025 bis 1,0 und insbesondere 0,05 bis 0,5 Gew.-% (bezogen auf B)) zur Oberflächenbeschichtung eingesetzt.

Andere geeignete Beschichtungsmittel (auch Schlichte genannt) basieren auf Isocyanaten, Phenolharzen oder Acrylsäurederivaten.

### Komponente (C)

Als Komponente C können die erfindungsgemäßen thermoplastischen Formmassen 0 bis 2, bevorzugt 0,01 bis 2 Gew.-%, bevorzugt 0,05 bis 1,5 Gew.-%, besonders bevorzugt 0,1 bis 1,5 Gew.-% mindestens eines Wärmestabilisators enthalten.

In einer bevorzugten Ausführungsform sind die Wärmestabilisatoren ausgewählt aus der Gruppe bestehend aus
- Verbindungen des ein- oder zweiwertigen Kupfers, z.B. Salze des ein- oder zweiwertigen Kupfers mit anorganischen oder organischen Säuren oder ein- oder zweiwertigen Phenolen, die Oxide des ein- oder zweiwertigen Kupfers, oder die Komplexverbindungen von Kupfersalzen mit Ammoniak, Aminen, Amiden, Lactamen, Cyaniden oder Phosphinen, bevorzugt Cu(I)- oder Cu(II)-Salze der Halogenwasserstoffsäuren, der Cyanwasserstoffsäuren oder die Kupfersalze der aliphatischen Carbonsäuren. Besonders bevorzugt sind die einwertigen Kupferverbindungen CuCl, CuBr, Cul, CuCN und Cu₂O, sowie die zweiwertigen Kupferverbindungen CuCl₂, CuSO₄, CuO, Kupfer(II)acetat oder Kupfer(II) stearat. Sofern eine Kupferverbindung verwendet wird, beträgt vorzugsweise die Menge an Kupfer 0,005 bis 0,5, insbesondere 0,005 bis 0,3 und besonders bevorzugt 0,01 bis 0,2 Gew.-%, bezogen auf die Summe der Komponenten A) bis E).

Die Kupferverbindungen sind handelsüblich bzw. ihre Herstellung ist dem Fachmann bekannt. Die Kupferverbindung kann als solche oder in Form von Konzentraten eingesetzt werden. Unter Konzentrat ist dabei ein Polymer, vorzugsweise gleicher chemischer Natur wie Komponente (A), zu verstehen, welches das Kupfersalz in hoher Konzentration enthält. Der Einsatz von Konzentraten ist ein übliches Verfahren und wird besonders häufig dann angewandt, wenn sehr geringe Mengen eines Einsatzstoffes zu dosieren sind. Vorteilhafterweise werden die Kupferverbindungen in Kombination mit weiteren Metallhalogeniden, insbesondere Alkalihalogenide wie Nal, KI, NaBr, KBr eingesetzt, wobei das molare Verhältnis von Metallhalogenid zu Kupfer 0,5 bis 20, bevorzugt 1 bis 10 und besonders bevorzugt 2 bis 5 beträgt.
- Stabilisatoren auf Basis sekundärer aromatischer Amine, wobei diese Stabilisatoren vorzugsweise in einer Menge von 0,2 bis 2, bevorzugt 0,5 bis 1,5 Gew.-% vorliegen,
- Stabilisatoren auf Basis sterisch gehinderter Phenole, wobei diese Stabilisatoren vorzugsweise in einer Menge von 0,05 bis 1,5, bevorzugt 0,1 bis 1 Gew.-% vorliegen, und
- Mischungen der vorstehend genannten Stabilisatoren.

Besonders bevorzugte Beispiele für erfindungsgemäß einsetzbare Stabilisatoren auf Basis sekundärer aromatischer Amine sind Addukte aus Phenylendiamin mit Aceton (Naugard^{®} A), Addukte aus Phenylendiamin mit Linolen, Naugard^{®}445 (II), N,N'-Dinaphthyl-p-phenylendiamin (III), N-Phenyl-N'-cyclohexyl-p-phenylendiamin (IV) oder Mischungen von zwei oder mehreren davon

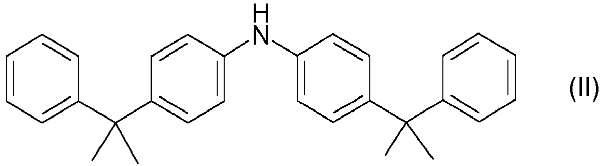

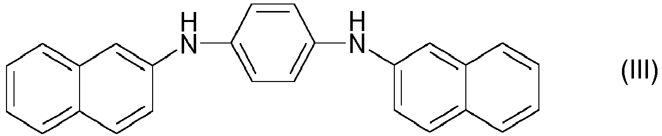

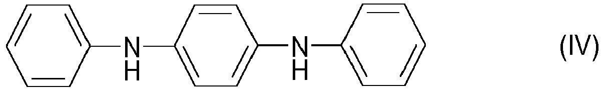

Bevorzugte Beispiele für erfindungsgemäß einsetzbare Stabilisatoren auf Basis sterisch gehinderter Phenole sind N,N'-Hexamethylen-bis-3-(3,5-di-tert-butyl-4-hydroxyphenyl)-propionamid (V), Bis-(3,3-bis-(4'-hydroxy-3'-tert-butylphenyl)-butansäure)-glykolester (VI), 2,1'-Thioethylbis-(3-(3,5-di.tert-butyl-4-hydroxyphenyl)-propionat (VII), 4-4'-Butyliden-bis-(3-methyl-6-tert.-butylphenol) (VIII), Triethylenglykol-3-(3-tert-butyl-4-hydroxy-5-methylphenyl)-propionat (IX) oder Mischungen von zwei oder mehr davon

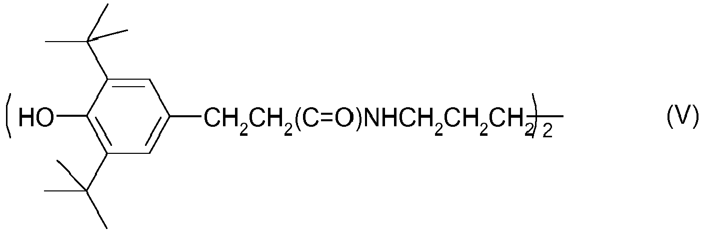

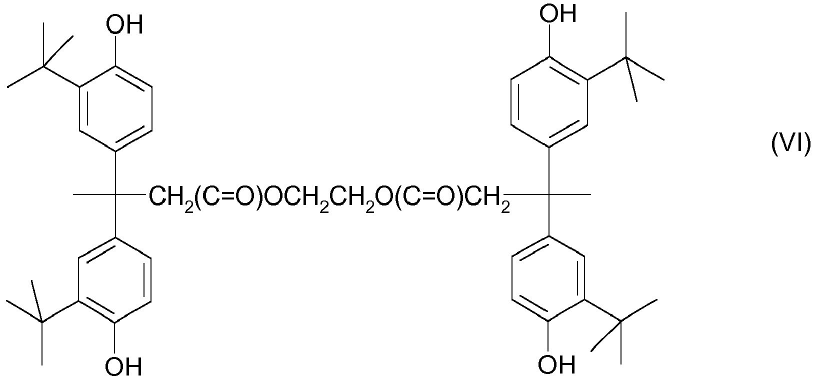

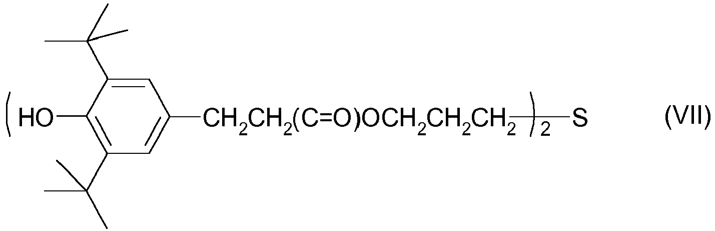

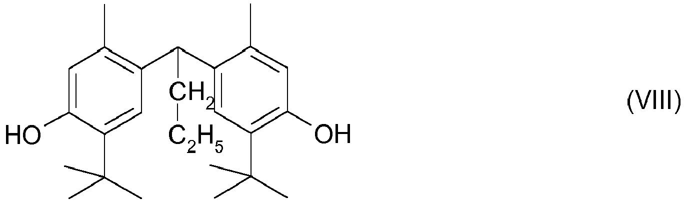

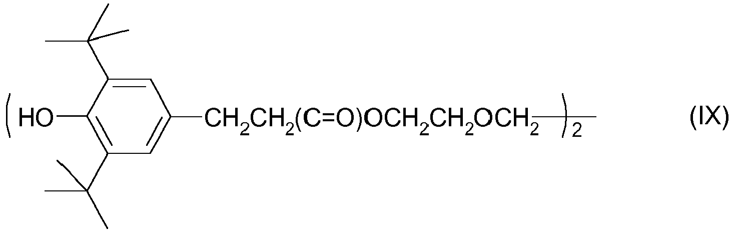

### Komponente (D)

Die erfindungsgemäßen thermoplastischen Formmassen können 0 bis 1,5 Gew.-%, bevorzugt 0,05 bis 1,5 Gew.-%, besonders bevorzugt 0,1 bis 1 Gew.-% eines Schmiermittels enthalten.

Bevorzugt sind Al-, Alkali-, Erdalkalisalze oder Ester- oder Amide von Fettsäuren mit 10 bis 44 C-Atomen, vorzugsweise mit 14 bis 44 C-Atomen. Die Metallionen sind vorzugsweise Erdalkali und Al, wobei Ca oder Mg besonders bevorzugt sind. Bevorzugte Metallsalze sind Ca-Stearat und Ca-Montanat sowie Al-Stearat. Es können auch Mischungen verschiedener Salze eingesetzt werden, wobei das Mischungsverhältnis beliebig ist.

Die Carbonsäuren können 1- oder 2-wertig sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung von Fettsäuren mit 30 bis 40 C-Atomen) genannt.
Die aliphatischen Alkohole können 1- bis 4-wertig sein. Beispiele für Alkohole sind n-Butanol, n-Octanol, Stearylalkohol, Ethylenglykol, Propylenglykol, Neopentylglykol, Pentaerythrit, wobei Glycerin und Pentaerythrit bevorzugt sind.

Die aliphatischen Amine können 1- bis 3-wertig sein. Beispiele hierfür sind Stearylamin, Ethylendiamin, Propylendiamin, Hexamethylendiamin, Di(6-Aminohexyl)amin, wobei Ethylendiamin und Hexamethylendiamin besonders bevorzugt sind. Bevorzugte Ester oder Amide sind entsprechend Glycerindistearat, Glycerintristearat, Ethylendiamindistearat, Glycerinmonopalmitrat, Glycerintrilaurat, Glycerinmonobehenat und Penta-erythrittetrastearat.

Es können auch Mischungen verschiedener Ester oder Amide oder Ester mit Amiden in Kombination eingesetzt werden, wobei das Mischungsverhältnis beliebig ist.

Als Komponente E) können die erfindungsgemäßen Formmassen 0 bis 30, vorzugsweise 0 bis 20 Gew.-% weiterer Zusatzstoffe enthalten.

Beispiele für Schlagzähmodifier sind Kautschuke, welche funktionelle Gruppen aufweisen können. Es können auch Mischungen aus zwei oder mehreren unterschiedlichen schlagzähmodifizierenden Kautschuken eingesetzt werden.

Kautschuke, die die Zähigkeit der Formmassen erhöhen enthalten im allgemeinen einen elastomeren Anteil, der eine Glasübergangstemperatur von weniger als -10°C, vorzugsweise von weniger als -30°C aufweist, und sie enthalten mindestens eine funktionelle Gruppe, die mit dem Polyamid reagieren kann. Geeignete funktionelle Gruppen sind beispielsweise Carbonsäure-, Carbonsäureanhydrid-, Carbonsäureester-, Carbonsäureamid-, Carbonsäureimid-, Amino-, Hydroxyl-, Epoxid-, Urethan- oder Oxazolingruppen, bevorzugt Carbonsäureanhydridgruppen.

Zu den bevorzugten funktionalisierten Kautschuken zählen funktionalisierte Polyolefinkautschuke, die aus folgenden Komponenten aufgebaut sind:
1. 40 bis 99 Gew.-% mindestens eines alpha-Olefins mit 2 bis 8 C-Atomen,
2. 0 bis 50 Gew.-% eines Diens,
3. 0 bis 45 Gew.-% eines C₁-C₁₂-Alkylesters der Acrylsäure oder Methacrylsäure oder Mischungen derartiger Ester,
4. 0 bis 40 Gew.-% einer ethylenisch ungesättigten C₂-C₂₀-Mono- oder Dicarbonsäure oder eines funktionellen Derivates einer solchen Säure,
5. 0 bis 40 Gew.-% eines Epoxygruppen enthaltenden Monomeren, und
6. 0 bis 5 Gew.-% sonstiger radikalisch polymerisierbarer Monomerer,
wobei die Summe der Komponenten 3) bis 5) mindestens 1 bis 45 Gew.-% beträgt, bezogen auf die Komponenten 1) bis 6).

Als Beispiele für geeignete alpha -Olefine können Ethylen, Propylen, 1-Butylen, 1-Pentylen, 1-Hexylen, 1-Heptylen, 1-Octylen, 2-Methylpropylen, 3-Methyl-1-butylen und 3-Ethyl-1-butylen genannt werden, wobei Ethylen und Propylen bevorzugt sind.

Als geeignete Dien-Monomere seien beispielsweise konjugierte Diene mit 4 bis 8 C-Atomen, wie Isopren und Butadien, nicht-konjugierte Diene mit 5 bis 25 C-Atomen, wie Penta-1,4-dien, Hexa-1,4-dien, Hexa-1,5-dien, 2,5-Dimethylhexa-1,5-dien und Octa-1,4-dien, cyclische Diene, wie Cyclopentadien, Cyclohexadiene, Cyclooctadiene und Dicyclopentadien, sowie Alkenylnorbornen, wie 5-Ethyliden-2-norbornen, 5-Butyliden-2-norbornen, 2- Methallyl-5-norbornen, 2-Isopropenyl-5-norbornen und Tricyclodiene, wie 3- Methyltricyclo-(5.2.1.0.2.6)-3,8-decadien, oder deren Mischungen genannt. Bevorzugt werden Hexa-1,5-dien, 5-Ethyliden-norbornen und Dicyclopentadien.

Der Diengehalt beträgt vorzugsweise 0,5 bis 50, insbesondere 2 bis 20 und besonders bevorzugt 3 bis 15 Gew.-%, bezogen auf das Gesamtgewicht des Olefinpolymerisats. Beispiele für geeignete Ester sind Methyl-, Ethyl-, Propyl-, n-Butyl, i-Butyl- und 2-Ethyl-hexyl-, Octyl- und Decylacrylate bzw. die entsprechenden Ester der Methacrylsäure. Von diesen werden Methyl-, Ethyl-, Propyl-, n-Butyl- und 2- Ethylhexylacrylat bzw. -methacrylat besonders bevorzugt. Anstelle der Ester oder zusätzlich zu diesen können in den Olefinpolymerisaten auch säure-funktionelle und/oder latent säurefunktionelle Monomere ethylenisch ungesättigter Mono- oder Dicarbonsäuren enthalten sein.

Beispiele für ethylenisch ungesättigte Mono- oder Dicarbonsäuren sind Acrylsäure, Methacrylsäure, tertiäre Alkylester dieser Säuren, insbesondere tert.-Butylacrylat und Dicarbonsäuren, wie Maleinsäure und Fumarsäure, oder Derivate dieser Säuren sowie deren Monoester.

Als latent säurefunktionelle Monomere sollen solche Verbindungen verstanden werden, die unter den Polymerisationsbedingungen bzw. bei der Einarbeitung der Olefinpolymerisate in die Formmassen freie Säuregruppen bilden. Als Beispiele hierfür seien Anhydride von Dicarbonsäuren mit 2 bis 20 C-Atomen, insbesondere Maleinsäureanhydrid und tertiäre C₁-C₁₂-Alkylester der vorstehend genannten Säuren, insbesondere tert.-Butylacrylat und tert.-Butylmethacrylat angeführt.

Als sonstige Monomere kommen z. B. Vinylester und Vinylether in Betracht.

Besonders bevorzugt sind Olefinpolymerisate aus 50 bis 98,9, insbesondere 60 bis 94,85 Gew.-% Ethylen, und 1 bis 50, insbesondere 5 bis 40 Gew.-% eines Esters der Acryl- oder Methacrylsäure 0,1 bis 20,0, insbesondere 0,15 bis 15 Gew.-% Glycidylacrylat und/oder Glycidylmethacrylat, Acrylsäure und/oder Maleinsäureanhydrid.

Besonders geeignete funktionalisierte Kautschuke sind Ethylen-Methylmethacrylat-Glycidylmethacrylat-, Ethylen-Methylacrylat-Glycidylmethacrylat-, Ethylen-Methyl-acrylat-Glycidylacrylat- und Ethylen-Methylmethacrylat-Glycidylacrylat-Polymere.

Die Herstellung der vorstehend beschriebenen Polymere kann nach an sich bekannten Verfahren erfolgen, vorzugsweise durch statistische Copolymerisation unter hohem Druck und erhöhter Temperatur.

Der Schmelzindex dieser Copolymere liegt im Allgemeinen im Bereich von 1 bis 80 g/10 min (gemessen bei 190°C und 2,16 kg Belastung).
Als weitere Gruppe von geeigneten Kautschuken sind Kern-Schale-Pfropfkautschuke zu nennen. Hierbei handelt es sich um in Emulsion hergestellte Pfropfkautschuke, die aus mindestens einem harten und einem weichen Bestandteil bestehen. Unter einem harten Bestandteil versteht man üblicherweise ein Polymerisat mit einer Glasübergangstemperatur von mindestens 25°C, unter einem weichen Bestandteil ein Polymerisat mit einer Glasübergangstemperatur von höchstens 0°C. Diese Produkte weisen eine Struktur aus einem Kern und mindestens einer Schale auf, wobei sich die Struktur durch die Reihenfolge der Monomerenzugabe ergibt. Die weichen Bestandteile leiten sich im Allgemeinen von Butadien, Isopren, Alkylacrylaten, Alkylmethacrylaten oder Siloxanen und gegebenenfalls weiteren Comonomeren ab. Geeignete Siloxankerne können beispielsweise ausgehend von cyclischem oligomerem Octamethyltetrasiloxan oder Tetravinyltetramethyltetrasiloxan hergestellt werden. Diese können beispielsweise mit gamma-Mercaptopropylmethyldimethoxysilan in einer ringöffnenden kationischen Polymerisation, vorzugsweise in Gegenwart von Sulfonsäuren, zu den weichen Siloxankernen umgesetzt werden. Die Siloxane können auch vernetzt werden, indem z.B. die Polymerisationsreaktion in Gegenwart von Silanen mit hydrolysierbaren Gruppen wie Halogen oder Alkoxygruppen wie Tetraethoxysilan, Methyltrimethoxysilan oder Phenyltrimethoxysilan durchgeführt wird. Als geeignete Comonomere sind hier z.B. Styrol, Acrylnitril und vernetzende oder pfropfaktive Monomere mit mehr als einer polymerisierbaren Doppelbindung wie Diallylphthalat, Divinylbenzol, Butandioldiacrylat oder Triallyl(iso)cyanurat zu nennen. Die harten Bestandteile leiten sich im Allgemeinen von Styrol, alpha-Methylstyrol und deren Copolymerisaten ab, wobei hier als Comonomere vorzugsweise Acrylnitril, Methacrylnitril und Methylmethacrylat aufzuführen sind.

Bevorzugte Kern-Schale-Pfropfkautschuke enthalten einen weichen Kern und eine harte Schale oder einen harten Kern, eine erste weiche Schale und mindestens eine weitere harte Schale. Der Einbau von funktionellen Gruppen wie Carbonyl-, Carbonsäure-, Säureanhydrid-, Säureamid-, Säureimid-, Carbonsäureester-, Amino-, Hydroxyl-, Epoxi-, Oxazolin-, Urethan-, Harnstoff-, Lactam- oder Halogenbenzylgruppen, erfolgt hierbei vorzugsweise durch den Zusatz geeignet funktionalisierter Monomere bei der Polymerisation der letzten Schale. Geeignete funktionalisierte Monomere sind beispielsweise Maleinsäure, Maleinsäureanhydrid, Mono- oder Diester der Maleinsäure, tertiär-Butyl-(meth)acrylat, Acrylsäure, Glycidyl(meth)acrylat und Vinyloxazolin. Der Anteil an Monomeren mit funktionellen Gruppen beträgt im Allgemeinen 0,1 bis 25 Gew.-%, vorzugsweise 0,25 bis 15 Gew.-%, bezogen auf das Gesamtgewicht des Kern-Schale-Pfropfkautschuks. Das Gewichtsverhältnis von weichen zu harten Bestandteilen beträgt im Allgemeinen 1 : 9 bis 9 : 1, bevorzugt 3 : 7 bis 8 : 2.

Derartige Kautschuke sind an sich bekannt und beispielsweise in der EP-A-0 208 187 beschrieben. Der Einbau von Oxazingruppen zur Funktionalisierung kann z.B. gemäß EP-A-0 791 606 erfolgen.

Eine weitere Gruppe von geeigneten Schlagzähmodifiern sind thermoplastische Polyester-Elastomere. Unter Polyester-Elastomeren werden dabei segmentierte Copoly-etherester verstanden, die langkettige Segmente, die sich in der Regel von Poly-(alkylen)etherglykolen und kurzkettige Segmente, die sich von niedermolekularen
Diolen und Dicarbonsäuren ableiten, enthalten. Derartige Produkte sind an sich bekannt und in der Literatur, z.B. in der US 3,651,014, beschrieben. Auch im Handel sind entsprechende Produkte unter den Bezeichnungen Hytrel TM (Du Pont), Arnitel TM (Akzo) und Pelprene TM (Toyobo Co. Ltd.) erhältlich.

Selbstverständlich können auch Mischungen verschiedener Kautschuke eingesetzt werden.

Ein Beispiel für Flammschutzmittel ist beispielsweise elementarer Phosphor. In der Regel kann der elementare Phosphor mit zum Beispiel Polyurethanen oder Aminoplasten oder Dialkylphthalaten, wie z.B. Dioctylphthalat, phlegmatisiert oder gecoated werden. Außerdem sind Konzentrate von rotem Phosphor zum Beispiel in einem Polyamid, Elastomeren oder Polyolefinen geeignet. Besonders bevorzugt sind Kombinationen von elementarem Phosphor mit 1,2,3,4,7,8,9,10,13,13,14,14-Dodecachloro-1,4,4a,5,6,6a,7,10,10a,11,12,12a-dodecahydro-1,4,7,10-dimethanodibenzoe(a,e)-cyclooctan (Dechlorane® TM Plus, Occidental Chemical Corp.) und gegebenenfalls einem Synergisten, wie Antimontrioxid. Phosphorverbindungen, wie organische Phosphate, Phosphonate, Phosphinate, Phosphinoxide, Phosphine oder Phosphite sind ebenfalls bevorzugt. Als Beispiel seien Triphenylphosphinoxid und Triphenylphosphat genannt. Dieses kann allein oder vermischt mit Hexabrombenzol oder einem chlorierten Biphenyl und, wahlweise, Antimonoxid verwendet werden.

Beispiele geeigneter Phosphate sind die folgenden:
Phenylbisdodocylphosphat, Phenylbisneopentylphosphat, Phenylethylhydrogenphos-phat, Phenyl-bis-(3-5,5'-trimethylhexyl)phosphat, Ethyldiphenylphosphat, 2- Ethylhexyldi(p-tolyl)phosphat, Bis-(2-ethylhexyl)phenylphosphat, Tri(nonylphenyl)phosphat, Phenylmethylhydrogenphosphat, Di(dodecyl)-p-tolylphosphat, Tri-cresylphosphat, Triphenylphosphat, Dibutylphenylphosphat, Diphenylhydrogenphosphat und Melaminpolyphosphat. Das am meisten bevorzugte Phosphat ist Triphenylphosphat. Weiter ist die Kombination von Triphenylphosphat mit Hexabrombenzol und Antimontrioxid bevorzugt.

Als Flammschutzmittel sind auch solche Verbindungen geeignet, die Phosphor-Stickstoff-Bindungen enthalten, wie Phosphornitrilchlorid, Phosphorsäureesteramide, Phosphorsäureesteramine, Phosphorsäureamide, Phosphonsäuramide, Tris(aziridinyl)-phosphinoxid oder Tetrakis(hydroxymethyl)phosphoniumchlorid. Diese entflammungshemmenden Additive sind größtenteils im Handel erhältlich.

Weitere geeignete Flammschutzmittel sind Hydroxide des Magnesiums, welche gegebenenfalls mit Silanverbindungen beschichtet sind oder Stickstoffverbindungen wie Melamincyanurat.

Weitere halogenhaltige Flammschutzmittel sind Tetrabrombenzol, Hexachlorbenzol und Hexabrombenzol sowie halogenierte Polystyrole und Polyphenylenether.

Auch die in der DE-A-19 46 924 beschriebenen halogenierten Phthalimide können verwendet werden. Von diesen hat insbesondere N,N'-Ethylenbistetrabromphthalimid Bedeutung erlangt.

Als Nukleierungsmittel können Natriumphenylphosphinat, Aluminiumoxid, Siliciumdi-oxid, Nylon 22 sowie bevorzugt Talkum eingesetzt werden.

Die vorliegende Erfindung betrifft auch ein Verfahren zur Herstellung der erfindungsgemäßen Formmassen, wobei die Komponenten (A), (B) und gegebenenfalls (C), (D) und (E) in den entsprechenden Mengen vermischt, bevorzugt durch Extrusion, werden. Bei diesem Verfahren können handelsübliche Zweiwellenextruder unterschiedlicher Größe (Wellendurchmesser) eingesetzt werden. Die Temperatur beträgt bei der Extrusion 200 bis 400°C, bevorzugt 250 bis 350°C, besonders bevorzugt 250 bis 320°C.

Die erfindungsgemäßen Polyamidformmassen können insbesondere durch die bekannten Verfahren zur Herstellung von langfaserverstärktem Stäbchengranulat hergestellt werden, insbesondere durch Pultrusionsverfahren, bei denen der endlose vorgeheizte Faserstrang (Roving) mit konstanter Geschwindigkeit durch die Polymerschmelze gezogen und dabei vollständig mit der Polymerschmelze durchtränkt und anschließend abgekühlt und geschnitten wird. Das auf diese Art und Weise erhaltene langfaserverstärkte Stäbchengranulat, das bevorzugt eine Granulatlänge von 2 bis 25 mm, Insbesondere von 4 bis 12 mm aufweist, kann mit den üblichen Verarbeitungsverfahren (wie z. B. Spritzgießen, Pressen) zu Formteilen weiterverarbeitet werden.

Das bevorzugte L/D-Verhältnis des Granulates beträgt nach Pultrusion 1 bis 8, insbesondere 2 bis 4.

Der aus erfindungsgemäßen Formmassen hergestellte Polymerstrang kann mit allen bekannten Granulierungsverfahren zu Granulat verarbeitet werden, wie z. B. durch Stranggranulierung, bei der der Strang in einem Wasserbad abgekühlt und anschließend geschnitten wird.

### Die Granulierung erfolgt beim LFT im trockenen Zustand.

Besonders gute Eigenschaften können beim Formteil mit schonenden Verarbeitungsverfahren erreicht werden. In diesem Zusammenhang bedeutet schonend vor allem, dass ein übermäßiger Faserbruch und die damit einhergehende starke Reduktion der Faserlänge weitgehend vermieden wird.

Beim Spritzguss bedeutet dies, dass Schnecken mit großem Durchmesser und tiefem Kompressionsverhältnis, insbesondere kleiner 2, und großzügig dimensionierte Düsen- und Angusskanäle bevorzugt zum Einsatz kommen. Ergänzend muss dafür gesorgt werden, dass die Stäbchengranulate mit Hilfe von hohen Zylindertemperaturen rasch aufschmelzen (Kontakterwärmung) und die Fasern nicht durch übermäßige Scherbeanspruchung zu stark zerkleinert werden. Unter Berücksichtigung dieser Maßnahmen werden erfindungsgemäß Formteile erhalten, die im Mittel eine höhere Faserlänge aufweisen als vergleichbare Formteile hergestellt aus kurzfaserverstärkten Formmassen. Hierdurch wird eine zusätzliche Verbesserung der Eigenschaften, insbesondere beim Zug, E·Modul, der Reißfestigkeit und der Kerbschlagzähigkeit erreicht.

Nach der Formteilverarbeitung z.B. durch Spritzguss beträgt die mittlere Faserlänge üblicherweise 0,05 bis 10 mm, insbesondere 0,35 bis 1,5 mm.

Die aus den erfindungsgemäßen Formmassen hergestellten Formkörper werden zur Herstellung von Innen- und Außenteilen, vorzugsweise mit tragender oder mechanischer Funktion im Bereich Elektro, Möbel, Sport, Maschinenbau, Sanitär und Hygiene, Medizin, Energie- und Antriebstechnik, Automobil und andere Transportmittel oder Gehäusematerial für Geräte und Apparate für die Telekommunikation, Unterhaltungselektronik, Haushaltsapparate, Maschinenbau, Heizungsbereich, oder Befestigungsteile für Installationen oder für Behälter und Lüftungsteile aller Art eingesetzt.

Die Mechanik, insbesondere die Schlagzähigkeit der erfindungsgemäßen Formteile ist deutlich höher, wobei gleichzeitig eine bessere Schwindung gegeben ist.

### Verarbeitungsverfahren

Neben den üblichen Verarbeitungsverfahren, wie Extrusion oder Spritzguss kommen auch folgende Verarbeitungsverfahren in Frage:
- CoBi-Injektion oder Montagespritzguss für Hybridteile, bei denen die erfindungsgemäße Polyesterformmasse mit anderen kompatiblen oder inkompatiblen Werkstoffen, wie z.B. Thermoplasten, Duroplasten oder Elastomeren kombiniert wird.
- Insertteile, wie z.B. Lagerstellen oder Gewindeeinsätze aus der erfindungsgemäßen Polyesterformmasse, umspritzt mit anderen kompatiblen oder inkompatiblen Werkstoffen, wie z.B. Thermoplasten, Duroplasten oder Elastomeren.
- Outsertteile, wie Rahmen, Gehäuse oder Stützen aus der erfindungsgemäßen Polyamidformmasse, in welche Funktionselemente aus anderen kompatiblen oderinkompatiblen Werkstoffen, wie z.B. Thermoplasten, Duroplasten oder Elastomeren eingespritzt werden.
- Hybridteile (Elemente aus der erfindungsgemäßen Polyamidformmasse kombiniert mit anderen kompatiblen oder inkompatiblen Werkstoffen, wie z.B. Thermoplasten, Duroplasten oder Elastomeren) hergestellt durch Verbundspritzguss, Spritzschweißen. Montagespritzguss, Ultraschall·, Reib- oder Laserschweißen, Kleben, Börteln oder Nieten.
- Halbzeuge und Profile (z.B. hergestellt durch Extrusion, Pultrusion, Schichtung oder Lamination).
- Oberflächenbeschichtung, Kaschierungen, chemisches- oder physikalisches Metallisieren, Beflockung, wobei die erfindungsgemäße Polyamidformmasse das Substrat selbst oder der Substratträger oder bei Hybrid/Bi-Injektionsteilen ein definierter Substratbereich sein kann, welcher auch durch nachträgliche chemische (z.B. Ätzen) oder physikalische Behandlung (z.B. spanabhebend oder LASER-Abtrag) zur Oberfläche gebracht werden kann.
- Bedrucken, Transferdruck, 3-D Druck, Laserbeschriften.

### Beispiele

Es wurden folgende Komponenten verwendet:

### Komponente A/1:

Polyamid 66 mit einer Viskositätszahl VZ von 125 ml/g, gemessen als 0,5 gew.-%ige Lösung in 96 gew.-%iger Schwefelsäure bei 25 °C nach ISO 307 (Es wurde Ultramid^{®} A24 der BASF SE verwendet).

### Komponente A/2:

Polyamid 6/6T (30/70) mit einer VZ von 126 ml/g gemäß 180307. (Es wurde Ultramid® T315 eingesetzt.)

### Komponente B/V:

ECR-Langglasfaser mit einem mittleren Durchmesser von 12 µm:
58,4 % SiO₂,
11,1 % Al₂O₃,
2,4 % TiO₂,
21,4 % CaO,
2,7 % MgO,
2,7 % ZnO,
0,8 % Na₂O,
0,1 % K₂O.

### Komponente B)

Langglasfaser mit einem mittleren Durchmesser von 12 µ:
58,3 Gew.-% SiO₂
18,4 Gew.-% Al₂O₃
12,1 Gew.-% CaO
10,3 Gew.-% MgO
0,9 Gew.-% anderer Oxide

### Komponente C)

Ca-Stearat

### Komponente D)

Irganox® 1098 der BASF SE

### Herstellung der Formmassen und Granulate

Die einzelnen Komponenten (Komponenten A) bis D)) wurden in einem seitlich angebrachten Zweischneckenextruder bei 300 °C gemischt und mit einem Massestrom von 28 kg/h über einen Übergang in die 300 °C heiße Imprägnierkammer gefüllt. Die auf 210 °C vorgeheizten Rovings wurden vorgespannt, damit sich die einzelnen Glasfasern nicht berühren und mit einer konstanten Geschwindigkeit von 10 m/min durch die sich in der Imprägnierkammer befindlichen Polymerschmelze gezogen. Dabei wurden die Glasfaserbündel vollständig mit der Polymerschmelze durchtränkt, und die so erhaltenen polymerummantelten Rovings wurden nach Verlassen der Imprägnierkammer in einem Wasserbad auf annähernd Raumtemperatur abgeschreckt. Schließlich wurden diese in ca. 6 mm lange Stäbchen geschnitten, so dass ein langfaserverstärktes Stäbchengranulat mit einem L/D Verhältnis von ca. 2 erhalten wurde.

Die Stäbchengranulate wurden zu Prüfkörpern Schulterstab ISO 527-2, Charpystab ISO 179-1 gemäß ISO verarbeitet und gemäß DIN/ISO Normen (s. Tabelle 2) die mechanischen Eigenschaften (s. Tabelle) gemessen. Die Schwindung wurde gemäß ISO 294-4 gemessen.

**Tabelle 1: Zusammensetzung der Formmassen**

| Komponenten [Gew.-%] | | | | |
|---|---|---|---|---|
| | Vergleich 1 | Vergleich 2 | Beispiel 1 | Beispiel 2 |
| A/1 | 39,6 | 0 | 39,6 | 0 |
| A/2 | 0 | 39,6 | 0 | 39,6 |
| B/V | 60 | 60 | 0 | 0 |
| B/1 | 0 | 0 | 60 | 60 |
| C | 0,2 | 0,2 | 0,2 | 0,2 |
| D | 0,2 | 0,2 | 0,2 | 0,2 |

**Tabelle 2: Eigenschaften**

| | Einheit | DIN | ISO | | | | |
|---|---|---|---|---|---|---|---|
| Produktmerkmale | | | | 1V | 2V | 1 | 2 |
| Dichte | g/cm³ | 53479 | 1183 | 1,696 | 1,730 | 1,698 | 1,734 |
| VZ (0,005 g/ml H₂SO₄) | cm³/g | 53727 | 307 | 117 | 104 | 110 | 85 |
| | | | | | | | |

| Mechanische Eigenschaften (trocken) | | | | | | | |
|---|---|---|---|---|---|---|---|
| Zug-E-Modul | MPa | | 527 | 19286 | 21226 | 23299 | 24524 |
| Bruchspannung | MPa | | 527 | 257 | 286 | 284 | 310 |
| Bruchdehnung | % | | 527 | 1,8 | 1,9 | 1,8 | 1,8 |
| Biege-E-Modul | MPa | | 178 | 19428 | 21412 | 21891 | 23408 |
| Biegespannung max. | MPa | | 178 | 423 | 430 | 453 | 481 |
| Randfaserdehnung max. | % | | 178 | 2,5 | 2,4 | 2,5 | 2,6 |
| Charpy Schlagzähigkeit | kJ/m² | | 179-2/1 eU | 90 | 86 | 88 | 105 |
| Charpy Kerbschlagzähigkeit | kJ/m² | | 179-2/1 eAf | 37,8 | 26,9 | 36,6 | 34,4 |
| | | | | | | | |

| Mechanische Eigenschaften (feucht) | | | | | | | |
|---|---|---|---|---|---|---|---|
| Zug-E-Modul | MPa | | 527 | 15490 | 22078 | 18241 | 23663 |
| Bruchspannung | MPa | | 527 | 197 | 256 | 225 | 272 |
| Bruchdehnung | % | | 527 | 2,1 | 1,7 | 2,1 | 1,7 |
| Biege-E-Modul | MPa | | 178 | 15441 | 21891 | 18086 | 23203 |
| Biegespannung max. | MPa | | 178 | 322 | 382 | 344 | 408 |
| Randfaserdehnung max. | % | | 178 | 3,0 | 2,2 | 2,9 | 2,2 |
| Charpy Schlagzähigkeit | kJm² | | 179-2/1 eU | 94 | 83 | 91 | 102 |
| Charpy Kerbschlagzähigkeit | kJ/m² | | 179-2/1 eAf | 35,2 | 26,3 | 33,4 | 34,0 |
| | | | | | | | |
| Verarbeitung | | | | | | | |
| Verarbeitungsschwindung | | | 294-4 | | | | |
| längs | % | | | 0,40 | 0,35 | 0,36 | 0,19 |
| quer | % | | | 0,70 | 0,60 | 0,67 | 0,27 |

## Patentansprüche

**1.** Thermoplastische Formmassen, enthaltend
A) 10 bis 90 Gew.-% mindestens eines Polyamids
B) 10 bis 70 Gew.-% mindestens einer Glasfaser der folgenden Zusammensetzung:
B1) 57,5 bis 59,5 Gew.-% SiO₂
B2) 17 bis 20 Gew.-% Al₂O₃
B3) 11 bis 13,5 Gew.-% CaO
B4) 8,5 bis 12,5 Gew.-% MgO
B5) 0 bis 4 Gew.-% weiterer Oxide
C) 0 bis 2 Gew.-% mindestens eines Wärmestabilisators,
D) 0 bis 1,5 Gew.-% mindestens eines Schmiermittels und
E) 0 bis 20 Gew.-% weiterer Zusatzstoffe,
wobei die Summe der Gewichtsprozente A) bis E) sowie B1) bis B5) 100 % beträgt.

**2.** Thermoplastische Formmassen nach Anspruch 1, wobei die Komponente A) ein teilkristallines Polyamid ist.

**3.** Thermoplastische Formmassen nach den Ansprüchen 1 oder 2, enthaltend
A) 20 bis 79,9 Gew.-%
B) 20 bis 60 Gew.-%
C) 0,01 bis 2 Gew.-%
D) 0 bis 1,5 Gew.-%
E) 0 bis 20 Gew.-%

**4.** Thermoplastische Formmassen nach den Ansprüchen 1 bis 3, enthaltend
A) 20 bis 79,9 Gew.-%
B) 20 bis 60 Gew.-%
C) 0,01 bis 2 Gew.-%
D) 0,05 bis 1,5 Gew.-%
E) 0 bis 20 Gew.-%

**5.** Thermoplastische Formmassen nach den Ansprüchen 1 bis 4, enthaltend Glasfasern B) der Zusammensetzung:
B1) 57,5 bis 58,5 Gew.-%
B2) 17,5 bis 19,0 Gew.-%
B3) 11,5 bis 13 Gew.-%
B4) 9,5 bis 11,5 Gew.-%
B5) 0 bis 3 Gew.-%

**7.** Thermoplastische Formmassen nach den Ansprüchen 1 bis 5, enthaltend als B5) Oxide der Elemente Li, Zn, Mn, Le, V, Ti, Be, Sn, Ba, Zr, Sr, Fe, B, Na, K oder deren Mischungen

**8.** Thermoplastische Formmassen nach den Ansprüchen 1 bis 6, in denen das Verhältnis MgO (B4) / Al₂O₃ (B2) der Komponente B) mindestens 0,52 bis maximal 0,75 beträgt.

**9.** Thermoplastische Formmassen nach den Ansprüchen 1 bis 7, in denen das Verhältnis MgO (B4) zu CaO (B3) 0,7 bis 1,3 beträgt.

**10.** Thermoplastische Formmassen nach den Ansprüchen 1 bis 8, in denen die Formmassen Stabilisatoren C) auf der Basis von Verbindungen des ein- oder zweiwertigen Kupfers oder sekundärer aromatischer Amine oder sterisch gehinderter Phenole oder deren Mischungen enthalten.

**11.** Verwendung der thermoplastischen Formmassen nach einem der Ansprüche 1 bis 10 zur Herstellung von Fasern, Folien, Formkörpern.

**12.** Formkörper jeglicher Art, erhältlich aus den thermoplastischen Formmassen gemäß den Ansprüchen 1 bis 10.

**13.** Verwendung der thermoplastischen Formmassen gemäß den Ansprüchen 1 bis 9 zur Herstellung von langfaserverstärkten Granulaten.

**14.** Verwendung nach Anspruch 12, wobei die Herstellung von langfaserstärkten Granulaten via Pultrusion erfolgt.
